# EUROPÄISCHE PATENTSCHRIFT

(11) **EP 1 194 805 B1**
(45) Veröffentlichungstag und Bekanntmachung des Hinweises auf die Patenterteilung: **26.05.2004**
(21) Anmeldenummer: 00954288.7
(22) Anmeldetag: 28.06.2000
(51) Int. Cl.: G02B 27/01

(54) **BILDDARSTELLUNGSSYSTEM UND -VERFAHREN FÜR FAHRZEUGE**
IMAGE REPRESENTATION SYSTEM AND METHOD FOR VEHICLES
SYSTEME ET PROCEDE DE REPRESENTATION D'IMAGE POUR VEHICULES

(30) Priorität: 02.07.1999 DE 19930710
(43) Veröffentlichungstag der Anmeldung: 10.04.2002
(73) Patentinhaber: EADS Deutschland GmbH, 81663 München (DE)
(72) Erfinder: HALLDORSSON, Thorsteinn, D-81927 München (DE)
(86) Internationale Anmeldenummer: PCT/DE2000/002115
(87) Internationale Veröffentlichungsnummer: WO 2001/002892

(56) Entgegenhaltungen:
- EP-A- 0 151 455
- EP-A- 0 450 553
- EP-A- 0 479 059
- DE-A- 4 445 555
- DE-A- 19 700 162

## Beschreibung

Die vorliegende Erfindung betrifft ein Bilddarstellungssystem für Fahrzeuge und ein Verfahren zur Darstellung von Bildern in Fahrzeugen.

Bekanntlich wird die Sicht nach hinten zur Beobachtung des nachkommenden Verkehrs aus einem Fahrzeug durch Innen- und Außenspiegel ermöglicht. Dies gilt sowohl für Autos, als auch für Lastwagen und Busse. Der Nutzen und die Einfachheit derartiger Rück- und Seitenspiegel ist unbestritten. Sie haben jedoch mehrere Beschränkungen und Nachteile, beispielsweise in bezug auf Sicherheit und wirtschaftliches Fahren.

Ein Nachteil des Innen- bzw. Rückspiegels ist die Begrenzung der Sicht nach hinten durch das Rückfenster oder durch Passagiere, die sich im Fahrzeug befinden. Auch die Sicht über den linken Außenseitenspiegel ist nicht vollständig, sondern hat einen sogenannten "toten Winkel", der häufig beim Spurwechsel die Ursache von Verkehrsunfällen ist.

Ein weiterer gravierender Nachteil der Rück- und Seitenspiegel ist, daß zum Betrachten ein Schwenken des Blicks seitlich um einen Winkel von etwa 30°-45° erforderlich ist. Während des Blicks in den Spiegel ist dadurch die Aufmerksamkeit des Fahrers in der Sicht nach vorne stark begrenzt. Der Grund hierfür ist, daß das scharfe Sehen mit dem Winkelabstand von der Augensehachse sehr rasch abfällt und bei einem Sehwinkel über 30° ausschließlich eine schwache Erkennung von Umrissen und Gestalten ohne deutliche Abstandswahrnehmung möglich ist. Dies ist keineswegs ausreichend, um auf unerwartete Verkehrsbehinderungen bzw. -situationen auf der Straße rasch zu reagieren.

Hinzu kommt, daß beim Fahren in der Dunkelheit eine starke Spiegelung von Scheinwerferlicht anderer Fahrzeuge in den Außenseitenspiegeln und dem Innenrückspiegel erscheint. Dies ist aufgrund der Blendwirkung sehr störend und ermüdet den Fahrer bei langen Fahrten. Häufig werden dadurch auch Unfälle verursacht.

Da die Außenspiegel über die seitlichen Begrenzungen der Fahrzeugkarrosserie hinausragen, können sie eine Behinderung oder Gefährdung für andere Verkehrsteilnehmer darstellen und auch beschädigt werden, beispielsweise beim Fahren durch sehr enge Gassen oder sehr nahe an anderen Verkehrsteilnehmern vorbei. Hinzu kommt, daß die Außenspiegel aufgrund ihres ungeschützten Anbaus am Auto schnell verschmutzen können, wodurch die Sicht behindert wird.

Ein weiterer großer Nachteil der Außenspiegel ist ihr Einfluß auf den C-Wert, der einen wirtschaftlichen Nachteil zur Folge hat. Beim schnellen Fahren auf Landstraßen und Autobahnen erhöht der Luftwiderstand der Seitenspiegel den Kraftstoffverbrauch von Autos um ca. 5%-10%. Störend sind weiterhin die Windgeräusche, die durch Verwirbelungen an den Seitenspiegelungen während der Fahrt entstehen.

Ein bekannter Ansatz zur Lösung der oben genannten Probleme liegt in der Verwendung von Kameras, die z.B. in die Fahrzeugkarosserie eingesenkt werden können. Beispielsweise kann mit mehreren Kameras hinten und seitlich an der Karosserie der Sichtwinkel um das Fahrzeug herum erheblich vergrößert werden. Das mit den Kameras aufgenommene Bild wird dann auf einem Monitor im Innenraum des Fahrzeugs dargestellt.

Dies hat jedoch den Nachteil, daß das dargestellte Bild sehr nahe beim Betrachter liegt. Im Gegensatz zum Blick in den herkömmlichen Rück- oder Seitenspiegel erfordert die Betrachtung des Monitors eine ständige Neuanpassung der Augen, was für den Fahrzeugführer ermüdend ist. Wenn der Blick des Fahrers wechselweise nach vome durch die Windschutzscheibe oder nach hinten durch den Rückspiegel gerichtet wird, muß daher eine Akkomodation und Konvergenzeinstellung der Augen erfolgen. Hinzu kommt, daß das Bild auf dem Monitor nicht senkrecht zur Sehachse erscheint, da dieser aus Platzgründen kaum derart im Fahrzeug angebracht werden kann.

Ein weiterer erheblicher Nachteil derartiger Systeme ist das Eigenleuchten des Monitors über einen weiten Raumwinkel. Dadurch wird der Innenraum des Fahrzeugs in der Dunkelheit deutlich erhellt und die Sicht des Fahrers nach außen erheblich erschwert.

Die Druckschrift EP 0 151 455 A2 beschreibt ein Head up Display, bei dem eine Projektionseinrichtung Licht auf ein reflektierendes holographisches Element projiziert, das das Licht zu einem holographischen Strahlvereiniger lenkt. Der holographische Strahlvereiniger formt ein virtuelles Bild für den Betrachter. Das reflektierende holographische Element wird mittels einer Punktlichtquelle und einem Spiegel hergestellt.

Ein weiteres Bilddarstellungssystem bzw. Head up Display wird in der Druckschrift EP 0 479 059 A1 beschrieben. Das Bilddarstellungssystem hat eine Projektionseinrichtung, die Licht auf ein reflektierendes Hologramm wirft. Über einen Spiegel und die Windschutzscheibe wird das Licht zum Fahrer gelenkt. Das reflektierende Hologramm wird mit einer punktförmigen Lichtquelle hergestellt.

Es ist die Aufgabe der vorliegenden Erfindung, ein Bilddarstellungssystem für Fahrzeuge zu schaffen, das eine Darstellung mit hoher Bildqualität ermöglicht und ein erhöhtes Maß an Ergonomie und Sicherheit im Verkehr bietet. Weiterhin soll ein Verfahren zur Darstellung von Bildern in Fahrzeugen angegeben werden, das für den Fahrzeugführer ein Betrachten von Bildern mit hoher Qualität während der Fahrt ermöglicht, ohne ihn abzulenken oder durch ständige Neuanpassung der Augen zu ermüden.

Diese Aufgabe wird gelöst durch das Bilddarstellungssystem gemäß Patentanspruch 1 und das Verfahren zur Darstellung von Bildern in Fahrzeugen gemäß Patentanspruch 14. Weitere vorteilhafte Merkmale, Aspekte und Details der Erfindung ergeben sich aus den abhängigen Ansprüchen, der Beschreibung und den Zeichnungen.

Das erfindungsgemäße Bilddarstellungssystem für Fahrzeuge umfaßt einen holographischen Bildschirm, der einfallendes schmalbandiges Licht einer oder mehrerer Wellenlängen in einen vorherbestimmten Raumwinkel streut, eine Projektionseinrichtung zur Projektion von Bildern auf den holographischen Bildschirm, und einen holographischen, transparenten Strahlvereiniger, der breitbandiges Umgebungslicht im wesentlichen ungehindert durchläßt und das vom holographischen Bildschirm kommende schmalbandige Licht zum Betrachter lenkt, um ein virtuelles Bild am Betrachtungsort zu erzeugen.

Durch die Erfindung werden die Vorteile herkömmlicher Rückspiegel, wie z.B. hohe Bildqualität und keine Notwendigkeit der Neuanpassung an stark wechselnde Entfernungen, mit den Vorteilen von Kamerasystemen verbunden. Zum einen wird ein hohes Maß an Ergonomie und Bildqualität erreicht, und zum anderen wird die Sicherheit und Wirtschaftlichkeit beim Fahren erhöht.

An das erfindungsgemäße Bilddarstellungssystem kann ein Kamerasystem gekoppelt sein, das nach hinten und/oder zur Seite gerichtet ist und somit Bilder vom Außenraum des Fahrzeugs liefert um die Sicht nach hinten und/oder zur Seite zu ermöglichen. Vorteilhafterweise ist der Strahlvereiniger aus der Sicht des Betrachters vor und/oder direkt auf der Windschutzscheibe des Fahrzeugs angeordnet. Bevorzugt ist der Strahlvereiniger als holographischer Spiegel ausgebildet oder als Strahlumlenker mit Linsenfunktion. Die Projektionseinrichtung kann Laser mit den Grundfarben Rot, Grün und Blau umfassen.

Vorzugsweise hat die Projektionseinrichtung einen Bildmodulator, z.B. in Form von ferroelektrischen Flüssigkeitsmodulatoren oder Micro-Mirror-Devices.

Der Strahlvereiniger kann auf einer transparenten Platte angeordnet sein, die z.B. aus Glas oder Kunststoff gefertigt ist. Insbesondere ist der holographische Strahlvereiniger zusammen mit dem holographischen Bildschirm so angeordnet, daß das virtuelle Bild für den Betrachter vergrößert hinter der Windschutzscheibe erscheint, vorzugsweise im Abstand von mindestens 1,5 Metern, insbesondere bevorzugt im Abstand von mindestens 3 Metern.

Weiterhin kann eine Vorrichtung zur Kopplung der Bilddarstellung an Fahrzeugsteuerungsfunktionen oder voreingestellte Fahrsituationen erfolgen. Der Strahlvereiniger und/oder der holographische Bildschirm sind bevorzugt so ausgestaltet bzw. angeordnet, daß der vom Strahlvereiniger kommende Lichtkegel auf den möglichen Aufenthaltsraum der Augen des Betrachters beschränkt ist. Vorzugsweise sind der holographische Bildschirm und der Strahlvereiniger so gestaltet bzw. angeordnet, daß sie eine Abbildungsfunktion aufweisen.

Das erfindungsgemäße Verfahren zur Darstellung von Bildern in Fahrzeugen umfaßt die Schritte:
Projizieren von Bildern auf einen holographischen Bildschirm und Führen der vom holographischen Bildschirm kommenden Lichtstrahlen ins Auge eines Betrachters, wobei durch ein Hologramm zur Strahlumlenkung, das dem holographischen Bildschirm nachgeschaltet ist, virtuelle Bilder in einem Flächenausschnitt der Front- bzw. Windschutzscheibe erzeugt werden. Dadurch wird die Ergonomie beim Führen von Fahrzeugen erhöht und es können Bilder des Außenraums dem Fahrzeugführer mit hoher Qualität angeboten werden, wobei die oben beschriebenen Nachteile von Rück- oder Seitenspiegeln und Monitoren überwunden werden.
Bei diesem Verfahren können die Bilder durch ein Kamerasystem aufgenommen werden, um in der Frontscheibe die Sicht nach hinten und/oder zur Seite zu ermöglichen. Vorzugsweise werden im Randbereich der Frontscheibe Bilder der Sicht nach hinten und/oder aus der Perspektive von Fahrzeugseitenspiegeln eingeblendet. Bevorzugt ist der Winkelabstand zwischen der Blickachse des Fahrzeugführers in Fahrtrichtung und dem virtuellen Bild kleiner als 30°, insbesondere bevorzugt ca. 10°. Weiterhin kann die Darstellung von Rück- und Seitenbildern aus dem Fahrzeug in Abhängigkeit von Fahrzuständen oder Fahrzeugsteuerungsfunktionen erfolgen.

Nachfolgend wird die Erfindung beispielhaft anhand der Figuren beschrieben, in denen
Figur 1 einen Längsschnitt durch ein Fahrzeug mit dem erfindungsgemäßen Bilddarstellungssystem und dem Strahlverlauf zeigt; und
Figur 2 eine Schnittansicht von oben mit verschiedenen Strahlengängen in einem Auto gemäß einer besonderen Ausgestaltung der Erfindung zeigt.

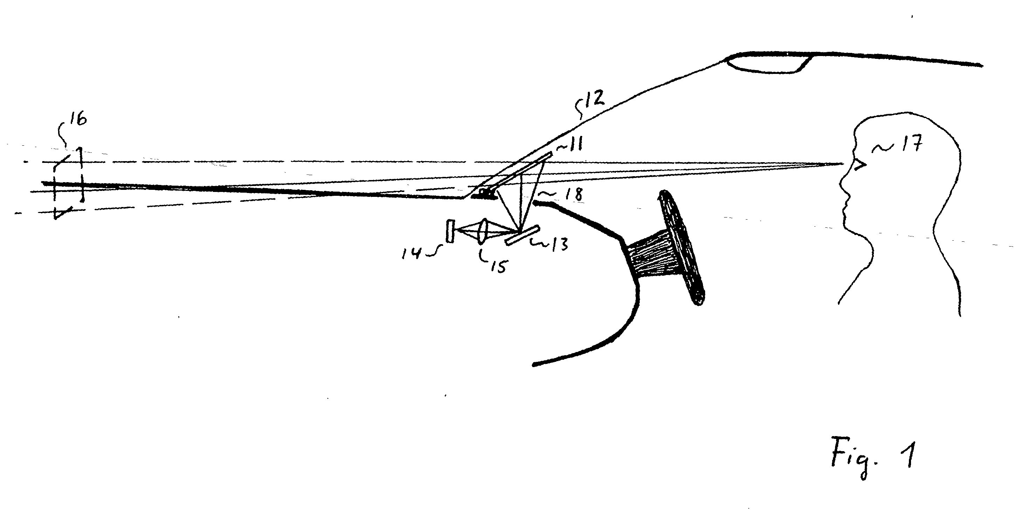

Figur 1 zeigt eine Seitenansicht bzw. einen Schnitt der Mittenebene durch den Fahrer eines Kraftfahrzeugs zur schematischen Darstellung des Bilddarstellungssystems und des Strahlverlaufs gemäß einer bevorzugten Ausführungsform der Erfindung. In dem Fahrzeug befindet sich ein holographischer Bildschirm 13, der durch eine holographische Aufnahme eines realen Bildschirms gefertigt ist. Mittels eines Bildmodulators 14 und eines Objektivs 15 wird zur Darstellung von Bildern Licht auf den holographischen Bildschirm 13 projiziert. Dadurch werden Bilder, die von einer Lichtquelle und dem Bildmodulator 14 erzeugt werden, durch das Objektiv 15 auf dem holographischen Bildschirm 13 reell abgebildet. Ein holographischer, transparenter Strahlvereiniger 11 bzw. Combiner ist so angeordnet, daß er die Lichtstrahlen, die in Folge der Bildprojektion vom holographischen Bildschirm 13 ausgehen, in Richtung zum Betrachter 17 umlenkt bzw. fast vollständig reflektiert. Der holographische, transparente Strahlvereiniger 11 umfaßt ein Hologramm mit der Abbildungseigenschaft eines Hohlspiegels bzw. einer Linse, so daß beim Betrachten des Strahlvereinigers 11 ein virtuelles Bild 16 am Betrachtungsort des Fahrers 17 erzeugt wird.

Der Strahlvereiniger 11 ist vom Betrachter 17 aus gesehen vor der Windschutzscheibe 12 des Fahrzeugs angeordnet. Durch seine Ausgestaltung als transparentes Hologramm läßt er das breitbandige Licht, das von außen durch die Windschutzscheibe 12 gelangt, fast ungehindert hindurch, so daß der Fahrer durch den Strahlvereiniger 11 nach außen blicken kann. Das Hologramm des Strahlvereinigers 11 ist jedoch so gestaltet, daß schmalbandiges bzw. monochromatisches Licht, z.B. Laserlicht in den Grundfarben rot, grün und blau, das vom holographischen Bildschirm 13 kommt, fast vollständig in Richtung zum Fahrer reflektiert wird.

In der hier gezeigten Ausführungsform sind die aus Modulator 14 und Objektiv 15 bestehende Projektionseinheit und der holographische Bildschirm 13 innerhalb des Armaturenbretts des Kraftfahrzeugs angeordnet. Durch eine Öffnung, die dem Öffnungswinkel 18 des Strahlengangs zwischen dem holographischen Bildschirm 13 und dem Strahlvereiniger 11 angepaßt ist, gelangen die Lichtstrahlen über den Strahlvereiniger 11 zum Betrachter 17.

Der Strahlvereiniger 11 ist in der hier gezeigten Ausführungsform als holographischer Spiegel ausgebildet. Er kann entweder direkt auf der Windschutzscheibe 12 aufgebracht sein, oder auf einer getrennten transparenten Platte, die vor der Windschutzscheibe 12 angeordnet ist. Als Alternative ist es auch möglich, daß der Strahlvereiniger 11 in Transmission ausgelegt ist, wobei er eine Linsenfunktion aufweist, die eine geeignete Umlenkung der Lichtstrahlen bewirkt.

Als holographische Materialien bzw. Hologramme für den holographischen Bildschirm 13 und den Strahlvereiniger 12 können z.B. Photopolymer-, Photoresist-, Silber-Halogenidund Dichromatgelatinhologramme verwendet werden. Der holographische Bildschirm 13 und der Strahlvereiniger 12 können in Reflexion oder auch in Transmission ausgestaltet sein.

Der holographische Bildschirm 13 und seine Herstellung ist detailliert in der Druckschrift DE 197 00 162 A1 beschrieben, auf die ausdrücklich Bezug genommen wird. Bei der Herstellung wird ein z.B. weißer reeller Bildschirm mit den später verwendeten Laser-Projektionswellenlängen in ein Hologramm einbelichtet. Bei der Aufnahme wird dafür gesorgt, daß der Schirm mit dem Objektstrahl so ausgeleuchtet wird, daß seine Rückstreucharakteristik die gleiche ist, wie sie später in der Anwendung erwünscht ist. Als Referenzstrahl bei der holographischen Aufnahme des Bildschirms dient dabei ein aufgeweitetes Strahlenbündel, das von einem entsprechenden Ort ausgeht, wie der spätere Projektionsstrahl. Zur Wiedergabe kann z.B. ein scannender Projektionsstrahl verwendet werden. Durch Bildmodulatoren 14 und Verwendung von Projektionswellenlängen in den Grundfarben Rot, Grün und Blau kann somit auf dem Hologramm beziehungsweise dem holographischen Bildschirm ein reelles Bild erzeugt werden. Weitere Möglichkeiten und Details der Herstellung ergeben sich aus der genannten Druckschrift.

Als Beleuchtungsquelle für die vollfarbige Bilddarstellung an den Bildmodulatoren 14 können vor allem rote, grüne und blaue Kristallaser, Glasfaserlaser und Diodenlaser verwendet werden. Der Leistungsbereich der verwendeten Laser liegt in der Größenordnung von einigen Milliwatt.

Als vollfarbige Bildmodulatoren eignen sich z.B. ferroelektrische Flüssigkeitsmodulatoren oder Micro-Mirror-Devices bzw. Mikrospiegel-Modulatoren. Dabei können verschiedene Bilddarstellungsnormen wie z.B. VGR, XGR, SXGR, PAL usw. verwendet werden.

Der Strahlvereiniger 11 und der holographische Bildschirm 13 sind so aufeinander abgestimmt, daß das virtuelle Bild 16 in einiger Entfernung vor der Windschutzscheibe 12 erscheint. Dadurch entfällt die ansonsten bei Monitoren notwendige wechselweise Akkomodation der Augen zur Nah- und Fernsicht. In der hier gezeigten Ausführungsform ist der Strahlvereiniger 11 vor der Windschutzscheibe 12 an deren unteren Rand angeordnet, so daß das virtuelle Bild 16 für den Betrachter bzw. Fahrzeugführer 17 in der Fahrbahn 16 oder in sichtbaren vorderen Teilen der Fahrzeugkarosserie, wie beispielsweise der Motorhaube, liegt. Der Blick nach vorne in Fahrtrichtung wird daher nicht beeinträchtigt und der Winkelabstand zwischen der Blickachse nach vorne in Fahrtrichtung und dem Projektionsbild ist äußerst gering. Bei normalen Kraftfahrzeugen herkömmlicher Bauart kann er z.B. auf 10° eingestellt werden. Selbst ein Winkelabstand von bis zu 30° bedeutet eine erhebliche Verbesserung gegenüber dem Blick in herkömmliche Fahrzeugspiegel oder Monitore.

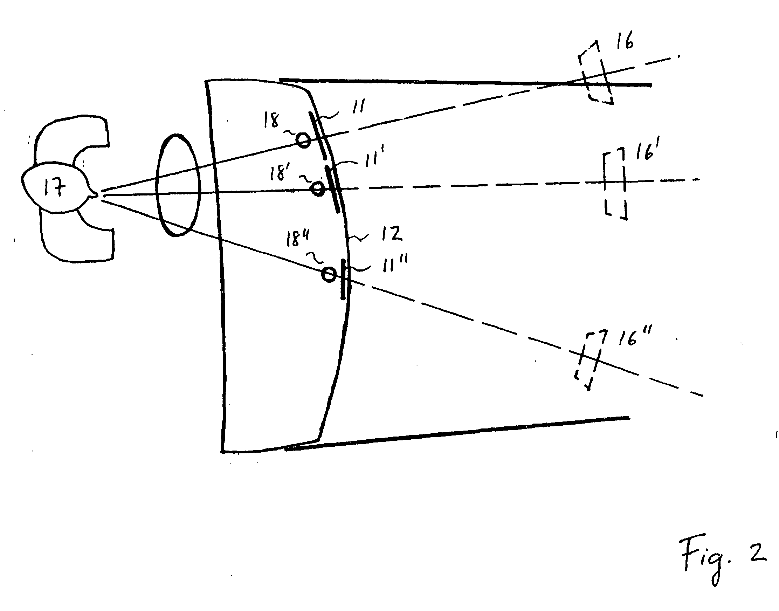

Figur 2 zeigt eine weitere Ausführungsform der Erfindung, bei der mehrere Bilder, die von getrennten Kamerasystemen aufgenommen werden als virtuelle Bilder 16, 16', 16" in der Windschutzscheibe bzw. Frontscheibe 12 des Fahrzeugs erscheinen. Dabei sind drei Projektoren mit zugehörigen holographischen Bildschirmen im Armaturenbrett bzw. hinter der Armaturenabdeckung angeordnet. An der Windschutzscheibe 12 befinden sich nebeneinander liegend die Strahlvereiniger 11, 11', 11" zur Erzeugung der virtuellen Bilder 16, 16', 16", die vom Betrachter 17 aus gesehen hinter dem jeweiligen Strahlvereiniger liegen. Die Kameras, Projektoren, holographischen Bildschirme und Strahlvereiniger sind so angeordnet, daß der Fahrzeugführer 17 beim Blick geradeaus nach vorne den Strahlvereiniger 11' mit dem Rückbild 16' sieht, während er durch die links und rechts davon gelegenen Strahlvereiniger 11, 11" das linke Rückbild 16 bzw. das rechte Rückbild 16' sehen kann. Dadurch können beispielsweise Bilder, wie sie in herkömmlich angeordneten Rück- bzw. Seitenspiegeln erscheinen, in der Windschutzscheibe 12 als virtuelle Bilder angeboten werden, die an einem Betrachtungsort in einiger Entfernung hinter der Frontscheibe 12 liegen.

Als Kameras zur Aufnahme der Außenbilder eignen sich z.B. CCD- und CMOS-Kameras, die einen weiten Helligkeitsbereich erfassen. Mit hochdynamischen CMOS-Kameras kann beispielsweise die Blendwirkung beim Fahren in der Nacht vermieden werden. Auch ist es möglich, Restlichtverstärkerkameras und ungekühlte Infrarot-Kameras zur Verbesserung der Sicht in der Nacht zusätzlich einzusetzen. Neben einer erheblichen Vergrößerung des Sichtwinkels um das Auto, die sich durch eine Anordnung mehrerer Kameras hinten und seitlich an der Karosserie ergibt, kann auch eine Rundumsicht um das Fahrzeug bei geeigneter Anordnung einer Vielzahl von Kameras ermöglicht werden.

Als Lichtquellen für die Projektion der Bilder auf den holographischen Bildschirm eignen sich neben Lasern auch andere monochromatische Lichtquellen, wie z.B. Leuchtdioden. Durch Projektion mit den Grundfarben Rot, Grün und Blau wird eine Farbbilddarstellung ermöglicht. Die erzeugten virtuellen Bilder 16, 16', 16" werden mit ausreichender Helligkeit in die Windschutzscheibe 12 projiziert, wo sie das Bild, der dahinter liegenden Umgebung überstrahlen. Durch geeignete Einstellung der Helligkeit kann aber z.B. auch eine gleichzeitige Betrachtung beider Bilder, d.h. des virtuellen Bildes 16, 16', 16" und des durchscheinenden reellen Bildes, erfolgen. Da der holographische Strahlvereiniger 12 transparent ist, wird das breitbandige Umgebungslicht fast ungehindert hindurch gelassen und die Sicht durch die Windschutzscheibe 12 ist vollständig frei, wenn das Zusatzbild bzw. virtuelle Bild 16, 16', 16" ausgeschaltet wird.

Da sich die räumliche Wahrnehmung des Fahrers über den Abstand und die Lage anderer Fahrzeuge oder den Verlauf der Straße im wesentlichen auf den Größenvergleich und die perspektivische Wahrnehmung stützt, und weniger auf das stereoskopische Sehen, genügt in der Regel eine monoskopische Bilddarstellung. Zur Vereinfachung der Konstruktion kann deshalb in der holographischen Projektion auf die technisch schwierigere stereoskopische Bilddarstellung ohne merklichen Informationsverlust verzichtet werden.

Das virtuelle Bild bzw. Hilfsbild 16, 16', 16" ist bei der beschriebenen Anordnung für den Fahrer im unteren Bereich der Windschutzscheibe 12 zu sehen. In diesem Bildrand, der sonst für den Fahrer ungenutzt bleibt, wird das virtuelle Rück- oder Seitenbild eingespiegelt und erscheint daher für den Betrachter in der Straße oder der Motorhaube des Kraftfahrzeugs.

Es ist aber auch möglich, das Bild auf einer getrennten, durchsichtigen Platte, die vor der Windschutzscheibe 12 montiert ist, erscheinen zu lassen. In diesem Fall erscheint das virtuelle Bild durch die Oberfläche des Instrumentenbrettes hindurch.

In einer weiteren besonderen Ausführungsform ist die Einblendung von Rück- und/oder Seitenbildern in die Windschutz- bzw. Fahrzeugscheibe 12 nicht ständig vorhanden, sondern an bestimmte Fahrzustände oder Steuerungen des Fahrzeugs gekoppelt. Beispielsweise kann eine Vorrichtung vorgesehen sein, die beim Einlegen des Rückwärtsgangs oder beim Betätigen der Blinklichter dem Fahrer 17 entsprechende Bilder anbietet.

Das Hologramm des Strahlvereinigers 11 ist so gestaltet und in bezug auf den holographischen Bildschirm 13 so ausgerichtet, daß der Lichtkegel, der vom Strahlvereiniger 11 in Richtung zum Fahrer ausgeht, durch den möglichen Aufenthaltsraum der Augen des Fahrers begrenzt ist. Die Lichtmenge der Projektion kann in Abhängigkeit von den Lichtverhältnissen, beispielsweise am Tag oder in der Nacht, gesteuert werden. Durch die Beschränkung des Lichtkegels und die eingestellte Lichtmenge erfolgt keine störende Erhellung des Fahrzeuginnenraums während der Nacht.

Durch die erfindungsgemäße Abbildung mit Zwischenschaltung eines Bildschirmhologramms und Vereinigung der Abbildungsfunktion für virtuelle Bilder mit dem Strahlvereiniger 11 wird die optimale Ausnutzung der Lichtmenge für den relativ breiten Bewegungsraum des Fahrzeugführers 17 ermöglicht. Schmalbandige Lichtquellen wie Laser oder Leuchtdioden ermöglichen eine vollfarbige Bilddarstellung bei einem einfachen und kostengünstigen Aufbau.

Zusammengefaßt ermöglicht die Erfindung eine Einblendung virtueller Bilder direkt in das Gesichtsfeld des Fahrers, ohne daß die Sicht nach vorne gestört wird.

## Patentansprüche

1. Bilddarstellungssystem für Fahrzeuge, mit
einer Projektionseinrichtung (14, 15), und
einem holografischen Strahlvereiniger (11, 11', 11''), der schmalbandiges Licht zu einem Betrachter (17) lenkt, um ein virtuelles Bild (16, 16', 16'') am Betrachtungsort zu erzeugen,
**gekennzeichnet durch**
einen holografischen Bildschirm (13), der **durch** holografische Aufnahme eines realen Bildschirms gefertigt ist und einfallendes schmalbandiges Licht einer oder mehrerer Wellenlängen in einem vorherbestimmten Raumwinkel streut,
wobei die Projektionseinrichtung (14, 15) Licht auf den holografischen Bildschirm (13) projiziert um dort reelle Bilder zu erzeugen, und der holografische Strahlvereiniger (11, 11', 11'') für breitbandiges Umgebungslicht transparent ist und das vom holografischen Bildschirm (13) gestreute schmalbandige Licht zum Betrachter (17) lenkt.

2. Bilddarstellungssystem nach Anspruch 1, **gekennzeichnet durch** ein Kamerasystem, das an die Projektionseinheit gekoppelt ist, zur Aufnahme von Bildern außerhalb des Fahrzeugs um die Sicht nach hinten und/oder zur Seite zu ermöglichen.

3. Bilddarstellungssystem nach Anspruch 1 oder 2, **dadurch gekennzeichnet, daß** der holographische Strahlvereiniger (11, 11', 11") zur Anordnung auf einer Frontscheibe (12) des Fahrzeugs dient.

4. Bilddarstellungssystem nach einem oder mehreren der vorhergehenden Ansprüche, **dadurch gekennzeichnet, daß** der Strahlvereiniger (11, 11', 11") als holographischer Spiegel ausgebildet ist.

5. Bilddarstellungssystem nach einem oder mehreren der vorhergehenden Ansprüche, **dadurch gekennzeichnet, daß** der Strahlvereiniger (11, 11', 11") als Strahlumlenker mit Linsenfunktion ausgebildet ist.

6. Bilddarstellungssystem nach einem oder mehreren der vorhergehenden Ansprüche, **dadurch gekennzeichnet, daß** die Projektionseinrichtung (14, 15) Laser mit den Grundfarben Rot, Grün und Blau umfaßt.

7. Bilddarstellungssystem nach einem oder mehreren der vorhergehenden Ansprüche, **dadurch gekennzeichnet, daß** die Projektionseinrichtung (14, 15) einen Bildmodulator (14) umfaßt, insbesondere ferroelektrische Flüssigkeitsmodulatoren und oder Micro-Mirror-Devices.

8. Bilddarstellungssystem nach einem oder mehreren der vorhergehenden Ansprüche, **dadurch gekennzeichnet, daß** der Strahlvereiniger (11, 11', 11") auf einer transparenten Platte angeordnet ist.

9. Bilddarstellungssystem nach einem oder mehreren der vorhergehenden Ansprüche, **dadurch gekennzeichnet, daß** der holographische Strahlvereiniger (11, 11', 11") und der holographische Bildschirm (13) so angeordnet sind, daß das virtuelle Bild für den Betrachter (17) vergrößert hinter einer Frontscheibe (12) des Fahrzeugs erscheint, vorzugsweise im Abstand von mindestens 1,5 Metern zum Betrachter, insbesondere bevorzugt im Abstand von mindestens 3 Metern.

10. Bilddarstellungssystem nach einem oder mehreren der vorhergehenden Ansprüche, **gekennzeichnet durch** eine Vorrichtung zur Kopplung der Bilddarstellung an Fahrzeugfunktionen und/oder Fahrzeugsteuerungsfunktionen.

11. Bilddarstellungssystem nach einem oder mehreren der vorhergehenden Ansprüche, **dadurch gekennzeichnet, daß** der Strahlvereiniger (11, 11', 11") und/oder der holographische Bildschirm (13) so ausgestaltet und im Fahrzeug angeordnet sind, daß der vom Strahlvereiniger (11, 11', 11") kommende Lichtkegel auf den möglichen Aufenthaltsraum der Augen des Fahrzeugführers beschränkt ist.

12. Bilddarstellungssystem nach einem oder mehreren der vorhergehenden Ansprüche, **dadurch gekennzeichnet, daß** der Strahlvereiniger (11, 11', 11") und/oder der holographische Bildschirm (13) so gestaltet und angeordnet sind, daß sie eine Abbildungsfunktion aufweisen.

13. Bilddarstellungssystem nach einem der vorhergehenden Ansprüche, **dadurch gekennzeichnet, dass** der Strahlvereiniger (11, 11', 11") auf einer transparenten Platte angeordnet ist, die zur Positionierung im Innenraum des Fahrzeugs vor dessen Windschutzscheibe (12) dient.

14. Verfahren zur Darstellung von Bildern in Fahrzeugen, mit den Schritten:
Projizieren von schmalbandigem Licht einer oder mehrerer Wellenlängen auf einen holografischen Bildschirm (13), der durch holografische Aufnahme eines realen Bildschirms gefertigt ist, zum Erzeugen eines reellen Bildes auf dem holografischen Bildschirm (13), und
Führen der vom holografischen Bildschirm (13) in einen vorbestimmten Raumwinkel gestreuten Lichtstrahlen ins Auge eines Betrachters (17),
wobei die Lichtstrahlen durch ein strahlvereinigendes Hologramm umgelenkt werden und ein virtuelles Bild beim Betrachter (17) erzeugen, während gleichzeitig breitbandiges Licht der hinter dem Hologramm liegenden Umgebung durch das Hologramm hindurchtritt.

15. Verfahren nach Anspruch 14, wobei im Randbereich der Frontscheibe (12) Bilder (16, 16', 16") der Sicht nach hinten und/oder aus der Perspektive von Fahrzeugseitenspiegeln eingeblendet werden.

16. Verfahren nach Annspruch 14 oder 15, wobei der Winkelabstand zwischen der Blickachse in Fahrtrichtung und dem virtuellen Bild (16, 16', 16") kleiner als 30° ist, vorzugsweise ca. 10°.

17. Verfahren nach einem oder mehreren der Ansprüche 14 bis 15, wobei Rück- und/oder Seitenbilder aus dem Fahrzeug in Abhängigkeit vom Fahrzustand oder von Fahrzeugsteuerungsfunktionen dargestellt werden.

## Claims

1. Image presentation system for vehicles, with
a projection facility (14, 15), and
a holographic beam combiner (11, 11', 11''), which directs narrow-band light to an observer (17), to generate a virtual image (16, 16', 16'') at the observation position, **characterized by**
a holographic screen (13), which is produced by holographic recording of a real screen and scatters incident narrow-band light of one or more wavelengths in a predetermined solid angle,
wherein the projection facility (14, 15) projects light onto the holographic screen (13) to generate real images there, and the holographic beam combiner (11, 11', 11'') is transparent for broad-band ambient light and directs the narrow-band light, which is scattered by the holographic screen (13), to the observer (17).

2. Image presentation system according to Claim 1, **characterized by** a camera system which is linked to the projection unit to record images outside the vehicle, to make the view to the rear and/or the side possible.

3. Image presentation system according to Claim 1 or 2, **characterized in that** the holographic beam combiner (11, 11', 11'') is used arranged on a windscreen (12) of the vehicle.

4. Image presentation system according to one or more of the preceding claims, **characterized in that** the beam combiner (11, 11', 11'') is in the form of a holographic mirror.

5. Image presentation system according to one or more of the preceding claims, **characterized in that** the beam combiner (11, 11', 11'') is in the form of a beam diverter with lens function.

6. Image presentation system according to one or more of the preceding claims, **characterized in that** the projection facility (14, 15) includes lasers with the primary colours red, green and blue.

7. Image presentation system according.to one or more of the preceding claims, **characterized in that** the projection facility (14, 15) includes an image modulator (14), particularly ferro-electric fluid modulators and/or micromirror devices.

8. Image presentation system according to one or more of the preceding claims, **characterized in that** the beam combiner (11, 11', 11'') is arranged on a transparent plate.

9. Image presentation system according to one or more of the preceding claims, **characterized in that** the holographic beam combiner (11, 11', 11'') and holographic screen (13) are arranged so that the virtual image appears to the observer (17) enlarged behind a windscreen (12) of the vehicle, preferably at a distance of at least 1.5 metres from the observer, especially preferably at a distance of at least 3 metres.

10. Image presentation system according to one or more of the preceding claims, **characterized by** a device for linking the image presentation to vehicle functions and/or vehicle control functions.

11. Image presentation system according to one or more of the preceding claims, **characterized in that** the beam combiner (11, 11', 11'') and/or the holographic screen (13) are in such a form, and arranged in the vehicle in such a way, that the cone of light coming from the beam combiner (11, 11', 11'') is restricted to the possible residence space of the eyes of the vehicle driver.

12. Image presentation system according to one or more of the preceding claims, **characterized in that** the beam combiner (11, 11', 11'') and/or the holographic screen (13) are in such a form, and arranged in such a way, that they have a mapping function.

13. Image presentation system according to one or more of the preceding claims, **characterized in that** the beam combiner (11, 11', 11'') is arranged on a transparent plate, which is used for positioning in the interior of the vehicle in front of its windscreen (12).

14. Method of presenting images in vehicles, with the following steps:
projecting narrow-band light of one or more wavelengths onto a holographic screen (13), which is produced by holographic recording of a real screen, to generate a real image on the holographic screen (13), and
guiding the light beams, which are scattered by the holographic screen (13) into a predetermined solid angle, into the eye of an observer (17),
wherein the light beams are diverted through a beam-combining hologram and generate a virtual image for the observer (17), while simultaneously broad-band light of the environment behind the hologram passes through the hologram.

15. Method according to Claim 14, wherein images (16, 16', 16'') of the view to the rear and/or from the perspective of vehicle side mirrors are superimposed in the edge area of the windscreen (12).

16. Method according to Claim 14 or 15, wherein the angular distance between the viewing axis in the driving direction and the virtual image (16, 16', 16'') is less than 30°, preferably approx. 10°.

17. Method according to one or more of Claims 14 to 15,
wherein rear and/or side images out of the vehicle are presented depending on the driving state or vehicle control functions.

## Revendications

1. Système de représentation d'image pour véhicules, comprenant un système de projection (14, 15), et un concentrateur de faisceau (11, 11', 11") holographique, qui dirige de la lumière à bande étroite vers un observateur (17) afin de générer une image virtuelle (16, 16', 16") sur le lieu d'observation,
**caractérisé par**
un écran (13) holographique, qui est fabriqué par l'enregistrement holographique d'un écran réel et diffuse de la lumière incidente à bande étroite présentant une ou plusieurs longueurs d'ondes dans un angle d'espace prédéfini,
le système de projection (14, 15) projetant de la lumière sur l'écran (13) holographique afin de générer des images réelles, et le concentrateur de faisceau (11, 11', 11") holographique étant transparent pour de la lumière ambiante à bande large et qui dirige la lumière à bande étroite et diffusé par l'écran (13) holographique vers l'observateur (17).

2. Système de représentation d'image selon la revendication 1, **caractérisé par** un système de caméra, qui est couplé à l'unité de projection, pour l'enregistrement d'images à l'extérieur du véhicule afin de permettre la visibilité vers l'arrière et/ou vers le côté.

3. Système de représentation d'image selon la revendication 1 ou 2, **caractérisé en ce que** le concentrateur de faisceau (11, 11', 11") holographique sert à la disposition sur un pare-brise (12) du véhicule.

4. Système de représentation d'image selon l'une ou plusieurs des revendications précédentes, **caractérisé en ce que** le concentrateur de faisceau (11, 11', 11") est conçu comme un miroir holographique.

5. Système de représentation d'image selon l'une quelconque ou plusieurs des revendications précédentes,
**caractérisé en ce que** le concentrateur de faisceau (11, 11', 11") est conçu comme un déviateur de faisceau avec fonction de lentille.

6. Système de représentation d'image selon l'une quelconque ou plusieurs des revendications précédentes,
**caractérisé en ce que** le système de projection (14, 15) comprend un laser avec les couleurs de base rouge, vert et bleu.

7. Système de représentation d'image selon l'une quelconque ou plusieurs des revendications précédentes,
**caractérisé en ce que** le système de projection (14, 15) comprend un modulateur d'image (14), en particulier des modulateurs à liquide ferroélectriques et/ou des micro-mirror-devices.

8. Système de représentation d'image selon l'une quelconque ou plusieurs des revendications précédentes,
**caractérisé en ce que** le concentrateur de faisceau (11, 11', 11") est disposé sur une plaque transparente.

9. Système de représentation d'image selon l'une quelconque ou plusieurs des revendications précédentes,
**caractérisé en ce que** le concentrateur de faisceau (11, 11', 11") holographique et l'écran (13) holographique sont disposés de telle sorte que l'image virtuelle paraît agrandie pour l'observateur (17) derrière un pare-brise (12) du véhicule, de préférence à la distance d'au moins 1,5 mètre par rapport à l'observateur, en particulier de préférence à la distance d'au moins 3 mètres.

10. Système de représentation d'image selon l'une quelconque ou plusieurs des revendications précédentes,
**caractérisé par** un dispositif pour le couplage de la représentation d'image à des fonctions de véhicule et/ou des fonctions de commande de véhicule.

11. Système de représentation d'image selon l'une quelconque ou plusieurs des revendications précédentes,
**caractérisé en ce que** le concentrateur de faisceau (11, 11', 11") et/ou l'écran (13) holographique sont équipés et disposés dans le. véhicule de telle sorte que le cône de lumière arrivant du concentrateur de faisceau (11, 11', 11") est limité à l'espace de séjour possible des yeux du conducteur de véhicule.

12. Système de représentation d'image selon l'une quelconque ou plusieurs des revendications précédentes,
**caractérisé en ce que** le concentrateur de faisceau (11, 11', 11") et/ou l'écran (13) holographique sont conçus et disposés de telle sorte qu'ils présentent une fonction de représentation.

13. Système de représentation d'image selon l'une quelconque des revendications précédentes, **caractérisé en ce que** le concentrateur de faisceau (11, 11', 11") est disposé sur une plaque transparente qui sert au positionnement à l'intérieur du véhicule devant son pare-brise (12).

14. Procédé pour la représentation d'image dans des véhicules, comprenant les étapes suivantes :
projection de lumière à bande étroite présentant une ou plusieurs longueurs d'ondes sur un écran (13) holographique, qui est fabriquée par l'enregistrement holographique d'un écran, pour générer une image réelle sur l'écran (13) holographique, et
guidage des faisceaux de lumière diffusés par l'écran (13) holographique dans un angle d'espace prédéfini dans l'oeil d'un observateur (17),
les faisceaux lumineux étant déviés par un hologramme concentrateur de faisceau et générant une image virtuelle sur l'observateur (17), alors que de la lumière à large bande de l'environnement disposé derrière l'hologramme passe simultanément à travers l'hologramme.

15. Procédé selon la revendication 14, des images (16, 16', 16") de la visibilité vers l'arrière et/ou provenant de la perspective de miroirs latéraux de véhicule étant superposées dans la zone périphérique du pare-brise (12).

16. Procédé selon la revendication 14 ou 15, la distance angulaire entre l'axe visuel dans la direction du véhicule et l'image virtuelle (16, 16', 16") étant inférieure à 30°, de préférence d'environ 10°.

17. Procédé selon l'une quelconque ou plusieurs des revendications 14 à 15, des vues arrières et/ou des vues latérales à partir du véhicule étant présentées en fonction de l'état de conduite ou de fonctions de commande du véhicule.
